# DEMANDE DE BREVET EUROPEEN

(11) **EP 2 079 047 A1**
(43) Date de publication de la demande: **15.07.2009**
(21) Numéro de dépôt: 08172878.4
(22) Date de dépôt: 24.12.2008
(51) Int. Cl.: G06Q 30/00

(54) **Procédé de fournitures d'annonces publicitaires personnalisées**

(30) Priorité: 08.01.2008 FR 0800098
(71) Demandeur: Alcatel Lucent, 75008 Paris (FR)
(72) Inventeur: Piekarec, Sophie, 91620 NOZAY (FR); Betge Brezetz, Stéphane, 91620 NOZAY (FR); Kamga, Guy-Bertrand, 91620 NOZAY (FR); Dupont, Marie-Pascale, 91620 NOZAY (FR)
(74) Mandataire: Korakis-Ménager, Sophie

(57) **Abrégé**

Procédé de diffusion d'annonces publicitaires personnalisées, comprenant les opérations suivantes :
- déterminer au moins un critère de diffusion;
- effectuer une présélection d'un groupe d'annonces publicitaires répondant au(x) critère(s) de diffusion ;
- effectuer parmi la présélection une sélection d'annonces présentant entre elles une corrélation intrinsèque fondée sur au moins un critère de corrélation prédéterminé ;
- concaténer les annonces sélectionnées pour former au moins une séquence publicitaire éligible ;
- élire une séquence parmi les annonces sélectionnées;
- diffuser la séquence élue.

## Description

L'invention a trait au domaine de la diffusion de contenu : télévision sur IP, télévision mobile, vidéo à la demande (VoD), etc., et plus particulièrement à la fourniture d'annonces publicitaires personnalisées dans un cadre de diffusion de contenu.

Pour de nombreux annonceurs, la télévision est devenue un support publicitaire incontournable, en raison du nombre important de clients potentiels parmi les téléspectateurs, et ce sur de nombreux marchés : alimentaire, automobile, électroménager, divertissement, etc.

Depuis de nombreuses années les annonceurs tentent de mieux cibler leurs clients potentiels. Dans la télévision classique, fonctionnant sur le principe du broadcast, c'est-à-dire la diffusion simultanée par un émetteur, en aveugle, à un grand nombre de récepteurs, le ciblage se limite généralement à deux critères : l'horaire d'écoute et le contenu de la diffusion.

Il est désormais une évidence que le profil des téléspectateurs varie selon les heures d'écoute. Les enfants sont une cible privilégiée aux heures matinales ; la ménagère a la faveur des annonceurs pour les émissions de l'après-midi, et la famille au complet est généralement réunie le soir devant son poste. Les annonceurs adaptent le contenu des publicités en conséquence : alimentaire par exemple pour les enfants, électroménager pour la ménagère, divertissement pour la famille.

Les annonceurs adaptent également le contenu des publicités à celui de la diffusion en cours, pour laquelle des profils types de téléspectateurs sont établis. Par exemple, les annonceurs cibleront majoritairement la ménagère dans les interruptions publicitaires des séries télévisées romantiques.

Dans la télévision classique, le ciblage publicitaire est toutefois approximatif, en raison des critères essentiellement statistiques sur lesquels il repose, et de la difficulté technique de mesurer l'impact publicitaire sur les cibles du fait du caractère monodirectionnel de la diffusion.

L'Internet et, plus récemment, les nouveaux modes de diffusion de contenu, tels que la télévision sur IP (IPTV), la télévision mobile, la VoD, etc.,sur tous types de supports (téléviseur, ordinateur, terminaux mobiles), ont bouleversé les habitudes des utilisateurs et des annonceurs, auxquels se sont ouvertes de nouvelles perspectives en matière de ciblage publicitaire.

S'agissant de l'Internet, diverses solutions existent pour diffuser des annonces publicitaires de manière ciblée, et pour mesurer l'impact publicitaire sur les utilisateurs. Citons à titre d'exemple Microsoft adCenter et Google adWords, fonctionnant sur le principe du « pay-per-click ». Suivant ce principe, un éditeur insère au coeur d'un site Internet une fenêtre publicitaire incluant un lien sponsorisé vers un site déterminé par l'annonceur, lequel récolte en retour des statistiques sur les utilisateurs ayant cliqué sur le lien, tout en versant pour chaque clic une redevance à l'éditeur. Il s'agit donc d'un ciblage généralement basé sur le contenu (celui du site dans lequel le lien publicitaire est inséré), conduisant à un ciblage basé sur le profil de l'utilisateur.

La multiplicité et le caractère intrusif des publicités diffusées sur l'Internet a toutefois rendu méfiants les utilisateurs ; aussi les annonceurs fondent-ils de grands espoirs sur les nouveaux modes de diffusion pour leur assurer un meilleur retour sur investissement.

Compte tenu du nombre important de données fournies par les utilisateurs lors des souscriptions aux services multimédias proposés par les opérateurs de télécommunication, les annonceurs sont capables d'établir des profils précis de leur clientèle potentielle et, de ce fait, de diffuser des annonces mieux ciblées que dans la télévision classique.

Parmi les nombreuses solutions existantes dans la diffusion d'annonces publicitaires personnalisées, citons à titre d'exemple la demande de brevet américain n°2007/0143787 (ALCATEL), qui décrit un procédé de diffusion d'annonces publicitaires à des instants prédéterminés à destination d'abonnés à un service de télévision interactive.

Les inventeurs ont estimé que les solutions existantes ne suffisent pas à servir les utilisateurs de manière pleinement satisfaisante. En particulier, les critères sur lesquels se fondent classiquement les annonceurs pour adapter leurs annonces (profil de l'utilisateur, horaire d'écoute, contexte de diffusion, etc.) apparaissent limités.

L'invention vise à pallier les insuffisances des solutions existantes, en proposant un procédé de diffusion d'annonces publicitaires personnalisées permettant de maximiser l'impact sur le téléspectateur.

A cet effet, l'invention propose, selon un premier aspect, un procédé de diffusion d'annonces publicitaires personnalisées, comprenant les opérations suivantes :
- déterminer au moins un critère de diffusion;
- effectuer une présélection d'un groupe d'annonces publicitaires répondant au(x) critère(s) de diffusion ;
- effectuer parmi la présélection une sélection d'annonces présentant entre elles une corrélation intrinsèque fondée sur au moins un critère de corrélation prédéterminé ;
- concaténer les annonces sélectionnées pour former au moins une séquence publicitaire éligible ;
- élire une séquence parmi les annonces sélectionnées;
- diffuser la séquence élue.

Les annonces de la séquence ainsi élue présentent une corrélation intrinsèque accrue qui améliore le ciblage de la diffusion publicitaire, maximisant ainsi son impact auprès des spectateurs.

Selon un deuxième aspect, l'invention propose un système de diffusion d'annonces publicitaires personnalisées, qui comprend :
- un module de définition de critères de corrélation intrinsèques entre annonces publicitaires ;
- un module de présélection d'annonces parmi un ensemble d'annonces en fonction de critères de diffusion ;
- un module de sélection d'annonces, relié au module de présélection, et configuré pour
   - effectuer parmi les annonces présélectionnées une sélection d'annonces présentant entre elles une corrélation intrinsèque fondée sur au moins un critère de corrélation prédéterminé ;
   - réaliser une concaténation d'annonces sélectionnées pour former une séquence ;
   - élire une séquence parmi les annonces sélectionnées.

Selon respectivement un troisième et un quatrième aspects, l'invention propose un produit programme d'ordinateur implémenté sur une unité de traitement informatique, ce programme comprenant des instructions pour la mise en oeuvre du procédé décrit ci-dessus, ainsi qu'un serveur média comprenant une telle unité de traitement.

D'autres objets et avantages de l'invention apparaîtront à la lumière de la description faite ci-après en référence aux dessins annexés dans lesquels :
- la figure 1 est un schéma illustrant l'architecture d'un système de diffusion d'annonces publicitaires suivant l'invention;
- la figure 2 est un schéma illustrant l'architecture d'un module de présélection d'annonces en fonction de divers critères.

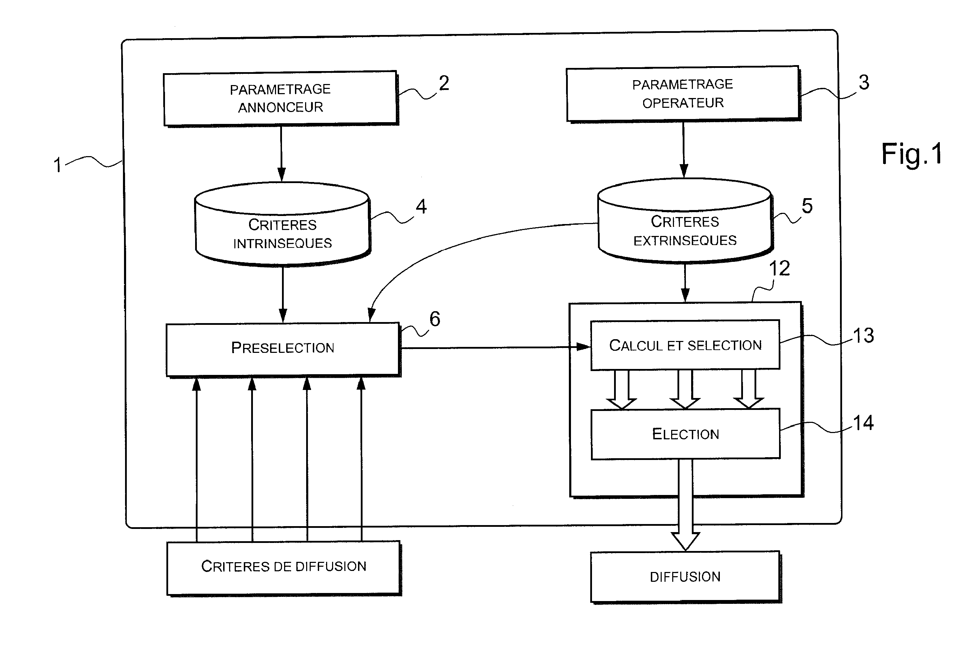

Sur la figure 1 est illustré un système 1 de diffusion d'annonces publicitaires dans un contexte de diffusion de contenu, par exemple via la télévision sur IP, la télévision mobile, la VoD, etc. L'architecture de ce système 1 est prévue pour diffuser des annonces publicitaires personnalisées à des abonnés à des services de diffusion de contenu, indépendamment du support de diffusion (téléviseur, ordinateur, terminaux mobiles), et plus précisément pour diffuser des séquences d'annonces publicitaires corrélées intrinsèquement, c'est-à-dire en fonction d'au moins un paramètre de corrélation propre aux annonces elles-mêmes.

Ce système 1 comprend deux modules 2, 3 de paramétrage permettant de définir des règles de sélection d'annonces publicitaires parmi un ensemble prédéfini d'annonces pour former des séquences d'annonces corrélées.

Plus précisément, le système comprend un premier module 2 de paramétrage des annonces elles-mêmes, accessible pour l'annonceur et permettant à celui-ci, via une interface graphique, de réaliser pour une annonce donnée les opérations suivantes de définition de critères de corrélation intrinsèque, à savoir :
- définition de métadonnées caractéristiques du contenu de l'annonce, notamment la thématique de l'annonce et un ensemble de termes-clés associés à cette thématique et décrivant le contenu de l'annonce;
- spécification de métadonnées caractéristiques du contenu d'autres annonces environnantes (c'est-à-dire susceptibles d'être combinées à la présente annonce au sein d'une même séquence), par exemple de thématiques ou de termes-clés décrivant le contenu des annonces, à privilégier dans le choix de ces annonces ;
- éventuellement spécification de métadonnées caractéristiques du contenu d'autres annonces en lien avec la présente annonce, par exemple de thématiques ou de termes-clés décrivant le contenu des annonces, à écarter dans le choix de ces annonces.

Ces opérations conduisent par exemple à l'élaboration d'une étiquette associée à l'annonce, contenant une série de métadonnées ordonnées en triplet et contenant trois séries de termes tels que définis ou spécifiés au moyen du module de paramétrage.

Par exemple, dans le domaine de l'automobile, une annonce vantant les mérites d'un véhicule pourrait être paramétrée de la manière suivante :
Métadonnées caractéristiques de l'annonce : véhicule, conduite, route ;
Métadonnées à privilégier : +GPS, +accessoires automobiles, +station essence, +caravaning ;
Métadonnées à écarter : -sécurité routière, -train, -avion, -autocar.
L'étiquette associée à l'annonce serait ainsi établie comme suit :
   ['véhicule, conduite, route','+GPS, +accessoires automobiles, +station essence, +caravaning',' -sécurité routière, -train, -avion, - autocar'].

La syntaxe proposée est fournie à titre d'exemple. On a ainsi attribué à toute métadonnée à privilégie un préfixe '+', et à toute métadonnée à écarter un préfixe '-', de sorte à permettre au système de reconnaître à quelle classe de métadonnées le terme suivant le préfixe doit être affecté : à privilégier pour le préfixe '+', à écarter pour le préfixe '-'.

Le système 1 comprend également une base de données 4 de stockage des étiquettes associées aux annonces publicitaires traitées au moyen du module 2 de paramétrage de l'annonceur, reliée à celui-ci.

Le système 1 comprend aussi un module 3 de paramétrage de règles, tels que prix, durée, priorités, etc., liées à l'exploitation des annonces, accessible pour l'opérateur et permettant à celui-ci, via une interface graphique, d'implémenter ces règles.

Le système 1 comprend par ailleurs une base de données 5, reliée au module 3 de paramétrage des règles, sur laquelle sont stockées les règles établies par l'opérateur via ce module 3.

Le système 1 comprend en outre un module 6 de présélection d'annonces, qui opère parmi un ensemble d'annonces une présélection d'annonces en fonction d'au moins un critère de diffusion, indépendant des critères de corrélation intrinsèques et des règles tels que définis ci-dessus, et choisis par exemple parmi la présence d'une annonce à diffusion obligatoire au sein de la séquence à diffuser, le contenu d'un programme (sous forme de méta-données issues d'un descriptif associé) au sein duquel (ou tout du moins en lien avec lequel) la diffusion publicitaire est effectuée, le profil de l'abonné, et le contexte de l'abonné.

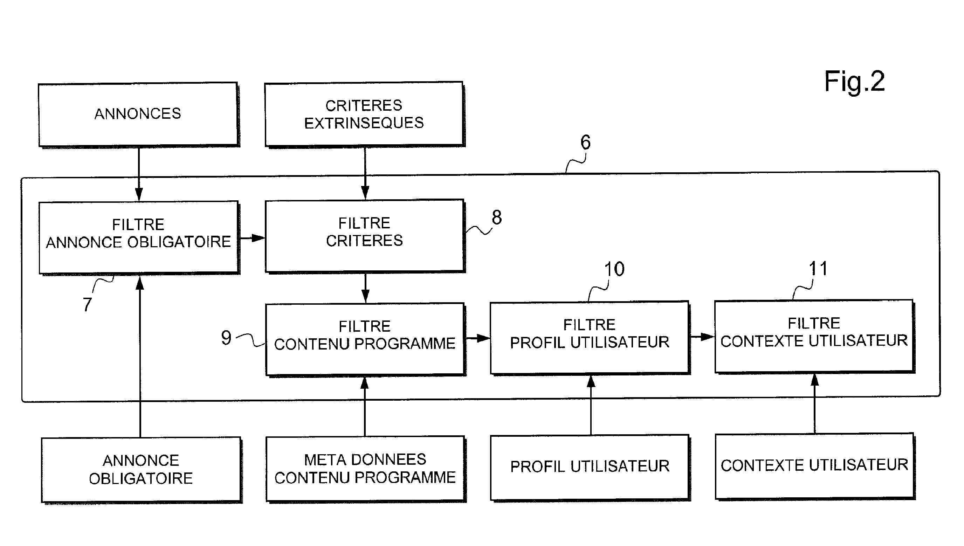

Comme cela est illustré plus en détail sur la figure 2, le module **6** de présélection comprend une série de filtres **7, 8, 9, 10, 11**, associés à chaque critère de diffusion, qui fonctionnent en série suivant un ordre de priorité prédéterminé (la priorité est décroissante de gauche à droite sur la figure) et permettent d'opérer parmi l'ensemble d'annonces un tri successif des annonces répondant à l'ensemble des critères.

Le module **6** de présélection est relié aux bases de données **4, 5** qui lui fournissent, sur requête, les critères de corrélation et les règles définis respectivement par l'annonceur et l'opérateur en lien avec les annonces présélectionnées.

Une fois la présélection opérée, celle-ci est transmise, avec les critères de corrélation associés à chaque annonce, à un module de sélection **12** comprenant deux sous-modules **13, 14,** à savoir :
- un sous-module **13** de calcul qui opère parmi la présélection une sélection d'annonces présentant entre elles une corrélation intrinsèque fondée sur au moins l'un des critères de corrélation tels que définis ci-dessus et concatène des annonces sélectionnées pour former des séquences d'annonces corrélées éligibles (c'est-à-dire susceptibles d'être sélectionnées pour être diffusées).
- un sous-module **14** de sélection auquel le sous-module 13 de calcul fournit au moins une séquence éligible, et qui opère parmi les séquences éligibles la sélection d'une séquence à diffuser en fonction d'au moins l'un des critères extrinsèques tels que définis ci-dessus.

La séquence ainsi élue est alors diffusée. Il est à noter que les annonces diffusées au sein d'une même séquence ne sont pas nécessairement au même format, mais peuvent être de formats différents (par exemple : texte défilant, vidéo, audio, etc.).

Le système qui vient d'être décrit, et sa mise en oeuvre, permettent d'opérer une personnalisation plus performante des séquences d'annonces diffusées, dans la mesure où il est tenu compte de critères de corrélation intrinsèques aux annonces elles-mêmes.

Il est par exemple envisageable, grâce à cette solution, de diffuser des séquences d'annonces publicitaires ciblées en matière d'automobile ayant toutes un lien entre elles sur le thème de l'automobile, tout en évitant que des annonces décrétées indésirables ne viennent polluer la séquence en diminuant l'impact des annonces environnantes (par exemple une annonce pour une compagnie de transport par train au milieu d'une séquence d'annonces incluant une annonce pour une location saisonnière de véhicules de tourisme, une annonce pour un journal automobile et une annonce pour un évènement sportif automobile à venir).

Les opérations décrites ci-dessus peuvent être réalisées au moyen d'un programme d'ordinateur implémenté sur une unité de traitement d'un serveur média, ce programme comprenant des instructions pour la mise en oeuvre de ces opérations.

## Revendications

1. Procédé de diffusion d'annonces publicitaires personnalisées, comprenant les opérations suivantes :
- déterminer au moins un critère de diffusion;
- effectuer une présélection d'un groupe d'annonces publicitaires répondant au(x) critère(s) de diffusion ;
- effectuer parmi la présélection une sélection d'annonces présentant entre elles une corrélation intrinsèque fondée sur au moins un critère de corrélation prédéterminé ;
- concaténer les annonces sélectionnées pour former au moins une séquence publicitaire éligible ;
- élire une séquence parmi les annonces sélectionnées ;
- diffuser la séquence élue.

2. Procédé selon la revendication 1, dans lequel les critères de corrélation intrinsèques renvoient à des métadonnées liées au contenu des annonces, ou à des métadonnées liées au contenu d'annonces environnantes.

3. Procédé selon la revendication 2, dans lequel les métadonnées comprennent des termes-clés décrivant le contenu des annonces.

4. Procédé selon l'une des revendications 1 à 3, dans lequel les critères de diffusion sont choisi parmi un groupe comprenant une annonce à diffusion obligatoire, le contenu d'un programme en lien avec lequel la diffusion est effectuée, le profil d'un abonné, le contexte de l'abonné.

5. Procédé selon l'une des revendications 1 à 4, dans lequel l'élection de l'annonce est effectuée en fonction de règles d'exploitation.

6. Procédé selon l'une des revendications 1 à 5, dans lequel les annonces d'une même séquence présentent des formats différents.

7. Système (1) de diffusion d'annonces publicitaires personnalisées, qui comprend :
- un module (2) de définition de critères de corrélation intrinsèques entre annonces publicitaires ;
- un module **(6)** de présélection d'annonces parmi un ensemble d'annonces en fonction de critères de diffusion ;
- un module **(12)** de sélection d'annonces, relié au module **(6)** de présélection, et configuré pour
- effectuer parmi les annonces présélectionnées une sélection d'annonces présentant entre elles une corrélation intrinsèque fondée sur au moins un critère de corrélation prédéterminé ;
- réaliser une concaténation d'annonces sélectionnées pour former une séquence ;
- élire une séquence parmi les annonces sélectionnées.

8. Produit programme d'ordinateur implémenté sur une unité de traitement informatique, ce programme comprenant des instructions pour la mise en oeuvre des opérations d'un procédé selon l'une des revendications 1 à 6.

9. Serveur média comprenant une unité de traitement sur laquelle est implémenté un programme selon la revendication 8.
